Europäisches Patentamt

**European Patent Office**

Office européen des brevets

(11) Veröffentlichungsnummer: **0 204 108**
**B1**

(12) **EUROPÄISCHE PATENTSCHRIFT**

(45) Veröffentlichungstag der Patentschrift:
**14.06.89**

(21) Anmeldenummer: **86105037.5**

(22) Anmeldetag: **12.04.86**

(51) Int. Cl.⁴: **G 02 C 7/02, B 08 B 3/12**

(54) **Verfahren zum Färben von Optikteilen.**

(30) Priorität: **03.06.85 US 740851**

(43) Veröffentlichungstag der Anmeldung:
**10.12.86 Patentblatt 86/50**

(45) Bekanntmachung des Hinweises auf die Patenterteilung:
**14.06.89 Patentblatt 89/24**

(84) Benannte Vertragsstaaten:
**CH DE FR GB IT LI NL SE**

(56) Entgegenhaltungen:
**EP-A- 0 122 771**
**FR-A- 1 462 953**
**US-A- 4 145 125**
**US-A- 4 382 824**

**PATENTS ABSTRACTS OF JAPAN, Band 7, Nr. 125**
**(P-200)[1270], 31. Mai 1983; & JP - A - 58 43 427 (SUWA**
**SEIKOSHA K.K.) 14-03-1983**

(73) Patentinhaber: **Roag AG, Kempttalstrasse 46,**
**CH-8308 Illnau (CH)**

(72) Erfinder: **Suter, Hans René, In Hätzelwisen 16/6,**
**CH-8602 Wangen (CH)**

(74) Vertreter: **Blum, Rudolf Emil Ernst et al, c/o E. Blum &**
**Co Patentanwälte Vorderberg 11, CH-8044 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zum Färben von Optikteilen aus Kunststoff, wobei das zu färbende Optikteil in einem Bad aus erwärmter Farblösung gefärbt und darin belassen wird, bis der gewünschte Farbton erreicht ist, und das gefärbte Optikteil nach dem Herausnehmen aus dem Bad abgespült und anschliessend getrocknet wird.

Das Färben von Optikteilen aus Kunststoff ist bekannt. In der Regel wird dabei das vorbereitete Optikteil in einem stehenden, erwärmten Bad aus Farblösung gefärbt und solange darin belassen, bis der gewünschte Farbton erreicht ist. Nach dem Herausnehmen werden die gefärbten Optikteile gespült und anschliessend getrocknet. Für das Eintauchen werden Mittel verwendet, mit denen Eintauchtiefe und -zeit kontrollierbar sind (siehe zum Beispiel FR-A-1 462 953).

Bei diesem Färben mit in Wasser gelöster Farbe wird über einen kürzeren Zeitraum die Homogenität der Farblösung sich dadurch ändern, dass die Farbpartikel im Behälter absinken. Es entsteht eine bekannte, unerwünschte Farb/Temperaturschichtung und eine unerwünschte Farbpartikelkonzentration am Badboden. Durch das Temperaturgefälle im Bad und das Absinken der Farbpartikel ist die gleichmäßige Einfärbung des Optikteils nicht gewährleistet. Die Reproduzierbarkeit definierter Farbtöne, insbesondere nach Mustervorlagen, ist nicht gewährleistet. Die Einfärbung des Optikteiles ist vor allem von der Affinität der Farbmoleküle an einer definierten Stelle zum entsprechenden Oberflächenabschnitt des Optikteiles abhängig.

Es ist außerdem bekannt, Ultraschall zur Herstellung einer Farblösung zur Einfärbung von plastischen Optikteilen zu verwenden, um die wasserlöslichen Dispersionsfarbpartikel in der Lösung besser aufzulösen (EP-A-9 122 771).

Hier will die Erfindung Abhilfe schaffen. Die Erfindung, wie sie im Patentanspruch gekennzeichnet ist, löst die Aufgabe, ein Verfahren zum Färben von Optikteilen aus Kunststoff zu schaffen, bei dem die Farblösung im ganzen Bad auf eine einstellbare, in engen Grenzen konstant gehaltene Temperatur erwärmt wird, das Absinken der Farbpartikel in der Farblösung bei gleichzeitiger Sicherstellung der Farbhomogenität durch kontinuierliche Umschichtung im Bad verhindert wird und der Molekularaustausch zwischen Farblösung und Optikteil durch die Umschichtung, die Ultraschalleinwirkung und die enge Temperaturkonstanz entscheidend verbessert wird.

Die Vorteile der Erfindung sind darin zu sehen, dass die zur Erreichung eines bestimmten Farbtones benötigte Zeit wesentlich verkürzt wird, die Absorption der Farbe, insbesondere kritische Farben, z.B. Grau, stark verbessert wird, und dass die Gleichmässigkeit der Einfärbung sichergestellt ist.

Gegenüber dem bekannten Verfahren, bei dem der Färbvorgang primär vom Zustand der Farblösung abhängt und folglich sich der Farbgradient pro Eintauchzeitdauer rasch unvorherbestimmbar ändert, wird beim erfindungsgemässen Verfahren jeweils der gleiche Farbgradient pro Eintauchzeitraum erreicht, so dass die Reproduzierbarkeit von Farbtönen gemäss Muster immer gewährleistet ist. In den nächsten Produktionsschritten führt das Verfahren während der nachstehenden Behandlungsschritte zu folgenden Vorteilen: Das Auswaschen der Farbe bei der nachfolgenden Reinigung mit Ultraschall vor dem Beschichten wird wesentlich herabgesetzt, d.h. ein Nacharbeiten der Gläser wird überflüssig, und während der Entgasungsphase zur Vakuumbeschichtung tritt ein wesentlich geringerer Farbverlust auf.

Das erfindungsgemässe Verfahren kann mit Vorteil in einem Behälter durchgeführt werden, der oben offen und zylinderförmig ausgestaltet ist. An der Mantelaussenseite des Behälters ist eine Heizvorrichtung z.B. eine elektrische Widerstandheizung so angeordnet, dass die Wärmeenergie gleichmässig über die gesamte Wandung auf die Farblösung übertragen wird. An der Unterseite des Behälterbodens ist ein Ultraschallgenerator angeordnet. Die Heizvorrichtung und der Generator sind mit einem entsprechenden Steuerschaltkreis verbunden.

Beim erfindungsgemässen Verfahren wird eine an sich bekannte Farblösung, die im wesentlichen aus Farbstoff und Wasser besteht, in den Behälter eingefüllt. Die Farblösung wird über die Seitenwandung des Behälters erwärmt und gleichzeitig oder nach Ablauf eines bestimmten Zeitraumes über die Bodenwandung des Behälters kontinuierlich beschallt.

Bei Erreichung der eingestellten Temperatur werden die zu färbenden Optikteile, z.B. Brillengläser, in Haltern angeordnet, in die Farblösung eingetaucht und unter gleichzeitiger Beschallung gefärbt. Die zu färbenden Optikteile werden so lange in der Farblösung belassen, bis der gewünschte Farbton erreicht ist. Dies kann mit an sich bekannten Geräten erfolgen, bei denen die Eintauchzeit und -tiefe einstellbar sind.

## Patentansprüche

1. Verfahren zum Färben von Optikteilen aus Kunststoff, wobei das zu färbende Optikteil in einem Bad aus erwärmter Farblösung gefärbt und darin belassen wird, bis der gewünschte Farbton erreicht ist und das gefärbte Optikteil nach dem Herausnehmen aus dem Bad abgespült und anschliessend getrocknet wird, dadurch gekennzeichnet, dass die Farblösung ausschliesslich über die Badseitenwandung gleichmässig mit Wärmeenergie und über die Badbodenwandung mit Ultraschallenergie beaufschlagt wird, um während des Einfärbevorganges die Badtemperatur in allen Punkten konstant zu halten , die Farbpartikel innerhalb der Lösungsflüssigkeit dauernd zu bewegen, eine homogene Durchmischung der Lösungsflüssigkeit zu erreichen und das Bad gleichförmig umzuschichten, wobei das Bad mit einer Frequenz im Bereich von 25 bis 60 kHz beschallt wird.

2. Verfahren nach Anspruch 1, dadurch gekennzeichnet, dass die durch Wärme- und Ultraschallenergie erwärmte Farblösung auf einem Temperaturwert gehalten wird, dessen Abweichung auf ± 2°C eingestellt ist.

3. Verfahren nach Anspruch 2, dadurch gekennzeichnet, dass die Farblösung auf mindestens 83°C erwärmt wird.

## Claims

1. Method of dyeing an optical article of plastic, wherein the optical article to be dyed is dyed in a bath of heated dyeing solution and is maintained therein until the desired tint is obtained and the dyed optical article is rinsed after removal from the bath and is dried thereafter, characterized in that, the dyeing solution is subjected uniformly to heating energy exclusively via a side wall of the bath and to ultrasonic energy via the bottom wall of the bath to maintain the temperature of bath at all points during dyeing to move continuously the particles of dye within the fluid of solution, to obtain a homogeneous mixing of the fluid of solution and to change off uniformly the bath, wherein the bath is subject to ultrasonic energy having a frequency in the range of 25 to 60 kHz.

2. Method according to claim 1, characterized in that the dyeing solution heated by heating energy and ultrasonic energy is maintained to a value of temperature, the deviation of which is adjusted to ± 2°C.

3. Method according to claim 2, characterized in that the dyeing solution is heated to at least 83°C.

## Revendications

1. Méthode pour colorer des composants optiques en matière synthétique, le composant optique à colorer étant coloré dans un bain de solution colorante chauffée et étant laissé dedans jusqu'à ce que la teinte souhaitée soit atteinte, et le composant optique coloré étant rincé après extraction hors du bain et ensuite séché, caractérisé en ce que la solution colorante est soumise exclusivement par la paroi latérale du bain uniformément à de l'énergie thermique et par la paroi de fond du bain à de l'énergie ultrasonique pour, pendant le processus de coloration, maintenir la température du bain constante en tous points, déplacer constamment les particules de colorant à l'intérieur du liquide de solution, atteindre un mélange intime homogène du liquide de solution, et regrouper uniformément le bain, le bain étant soumis à l'action des ultrasons à une fréquence dans la gamme de 25 à 60 khz.

2. Méthode selon la revendication 1, caractérisée en ce que la solution colorante chauffée par énergie thermique et ultrasonique est maintenu à une valeur de température dont la tolérance est maintenue à ± 2°C.

3. Methode selon la revendication 2, caractérisée en ce que la solution colorante est chauffée à au moins 83°C.